# EUROPEAN PATENT SPECIFICATION

(11) **EP 4 038 757 B1**
(45) Date of publication and mention of the grant of the patent: **26.03.2025**
(21) Application number: 19795001.7
(22) Date of filing: 28.10.2019
(51) Int. Cl.: H04B 7/06, H04B 7/0452

(54) **TECHNIQUES FOR MANAGING BEAMFORMED UPLINK TRANSMISSIONS OF BEAMFORMER DEVICES**
TECHNIKEN ZUM VERWALTEN VON STRAHLGEFORMTEN UPLINK-ÜBERTRAGUNGEN VON STRAHLFORMERN
TECHNIQUES DE GESTION DE TRANSMISSIONS EN LIAISON MONTANTE FORMÉES EN FAISCEAUX DE DISPOSITIFS FORMATEURS DE FAISCEAUX

(43) Date of publication of application: 10.08.2022
(73) Proprietor: Huawei Technologies Co., Ltd., Shenzhen, Guangdong 518129 (CN)
(72) Inventor: SHILO, Shimon, 80992 Munich (DE); EZRI, Doron, 80992 Munich (DE); REDLICH, Oded, 80992 Munich (DE); YU, Jian, 80992 Munich (DE); GAN, Ming, 80992 Munich (DE); TSODIK, Genadiy, 80992 Munich (DE)
(74) Representative: Gill Jennings & Every LLP
(86) International application number: PCT/EP2019/079359
(87) International publication number: WO 2021/083476

(56) References cited:
- CN-A- 107 241 798
- CN-A- 107 241 798
- US-A1- 2017 111 924
- US-A1- 2017 111 924
- US-A1- 2018 167 177
- US-A1- 2018 167 177

## Description

### TECHNICAL FIELD

The present disclosure relates to techniques for managing beamformed uplink transmissions of beamformer devices such as WiFi client stations. The transmissions may be initiated by a beamformee device such as a WiFi access point (AP). In particular, the disclosure relates to a beamforming procedure for uplink transmissions in WiFi.

### BACKGROUND

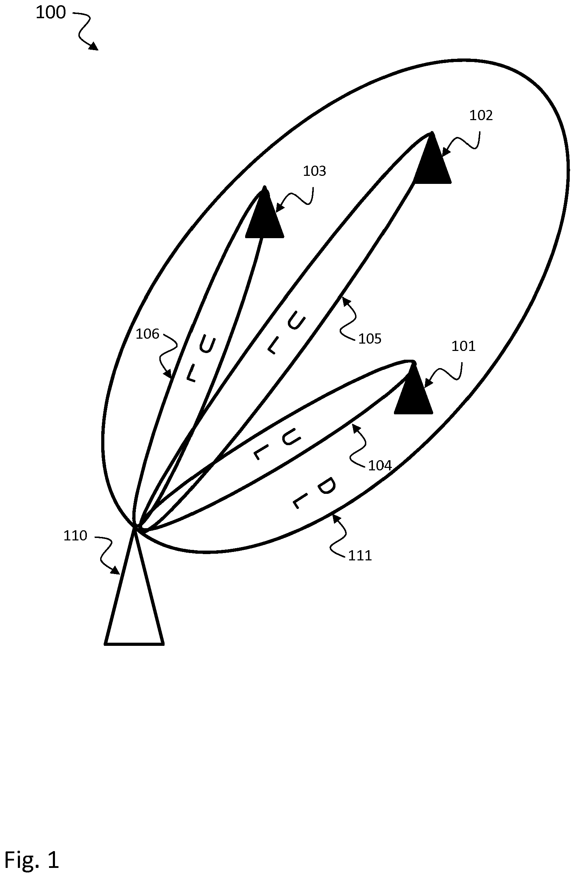

Beamforming is widely used in Wi-Fi communication systems as a technique to improve performance in MIMO scenarios, e.g. as shown in Fig. 1 where an access point 110 transmits in downlink direction to a plurality of client stations 101, 102, 103, e.g. by using a wide beam 111, and each client station 101, 102, 103 transmits in uplink direction towards the access point 110, e.g. by using a narrow beam 104, 105, 106. IEEE 802.11n/ac/ax support feedback of precoding matrices that can be used for beamforming. Many contributions and much research were carried out in order to examine the properties of beamforming and design efficient methods to support it. However, the procedures are optimized mostly for downlink transmission and may be (partially or non-efficiently) reused by the uplink. When applying the currently existing procedures of downlink beamforming to the uplink, various problems will arise as the uplink transmission is different from the downlink transmission.

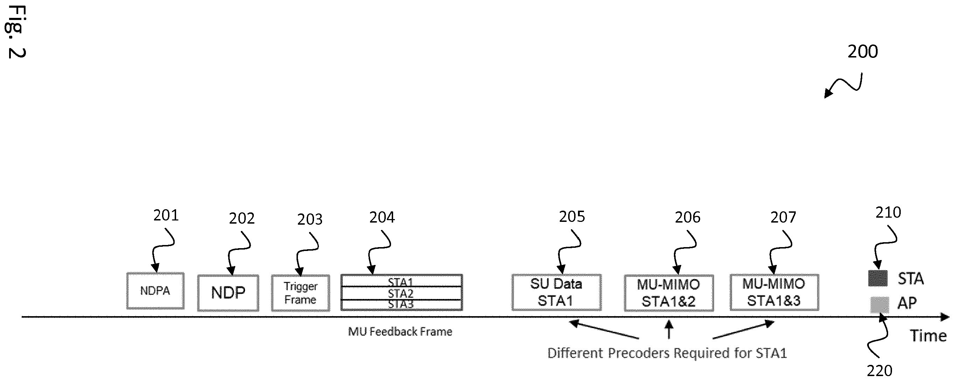

DL beamforming is fully managed by the AP 110 while the precoder can be adjusted according to currently scheduled transmission. Different transmission schemes may require different precoders to achieve better performance - SU, MU, MU-MIMO. AP 110 collects the feedback information from different stations 101, 102, 103 and may compute the relevant precoder optimized for specific packet, e.g. as shown in Fig. 2 where after NDPA 201, NDP 202, trigger frame 203 and Multi User Feedback 204 transmission, different precoders may be required for STA1, 101 to achieve better performance: SU Data STA1, 205, MU-MIMO STA1&2, 206, and MU-MIMO STA1&3, 207.

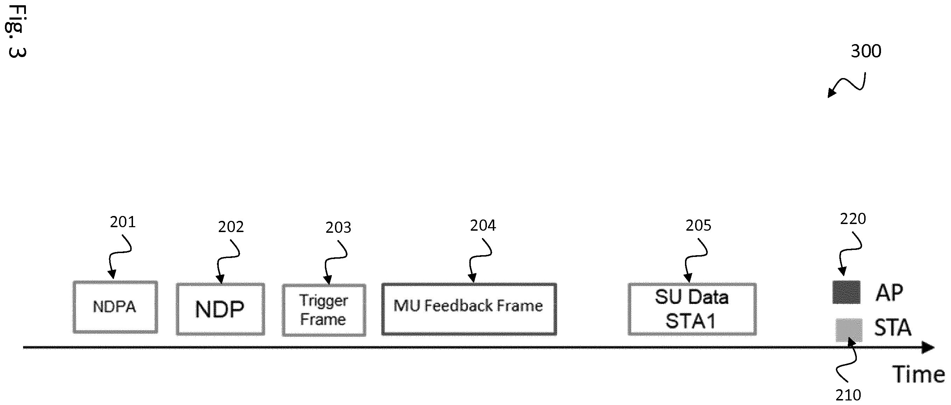

In UL the same procedure is applied while the STA acts as a beamformer and thus triggers the procedure and collects the precoder feedback from a beamformee (AP), see Figure 3 where after NDPA 201, NDP 202, trigger frame 203 and Multi User Feedback 204 transmission, SU Data STA1 transmission 205 is performed. This means that STA holds the precoder information and decides when and which precoder to apply.

Similar to DL, different precoders may be required in UL for several reasons as for example: Nonorthogonal precoder - SVD based precoder may be not optimal if Nss > 1 (same STA may transmit with different Nss in MU and MU-MIMO); Decoder type relaxation - AP may adjust a precoder type for a detector that will be applied, for example to use MMSE instead of ML to detect MU-MIMO; Null Steering - advanced interference mitigation schemes may require different precoder adjusted to current interference spatial properties. However, currently access point (AP) cannot update and inform STAs regarding specific precoder that should be applied in the next UL frame.

A beamformee is a receiver that is capable of obtaining, calculating and returning (i.e. feeding back) beamforming data, e.g. in accordance with a protocol (e.g. a WiFi protocol) and is capable of participating in a sounding procedure. These capabilities are mandatory for WiFi receivers. Hence, any WiFi receiver can operate as a beamformee.

CN 107 241 798 A discloses a kind of indicating means of resource allocation and relevant device.

US 2018/167177 A1 discloses communication networks and, more particularly, to sounding methods in wireless local area networks based on OFDMA and MU-MIMO. US 2017/111924 A1 discloses frame formats for orthogonal frequency division multiple access (OFDMA) and multi-user multiple-input multiple-output (MU-MIMO) uplink feedback transmissions in packet based wireless systems, for example IEEE 802.11.

### SUMMARY

It is the object of the invention to provide an efficient technique for solving the above described problems when applying the currently existing procedures for UL beamforming.

This object is achieved by the features of the independent claims. Further implementation forms are apparent from the dependent claims, the description and the figures.

A main idea of the invention is to transmit, by a beamformee device, e.g. a WiFi access point, to one or more beamformer devices, e.g. WiFi client stations, an indication of a precoder for Uplink transmission per Uplink transmission. In this disclosure an adjustment of the precoder per UL frame is justified and a method that supports it is presented.

In orderto describe the invention in detail, the following terms, abbreviations and notations will be used:
- STA:: Station, Client station, User Equipment
- AP:: Access Point
- BF:: Beamforming
- DL:: Downlink
- UL:: Uplink
- CP:: Cyclic Prefix
- FFT:: Fast Fourier Transform
- GI:: Guard Interval
- OFDM:: Orthogonal Frequency Division Multiplex
- Rx:: Receiver
- Tx:: Transmitter
- MIMO:: Multiple Input Multiple Output
- MU-MIMO:: Multi User MIMO
- SU:: Single User
- NDP:: Null Data Packet
- NDPA:: Null Data Packet Announcement
- CSI:: Channel State Information
- PMI:: Precoding Matrix Index
- LDPC:: Low Density Parity Check
- SVD:: Singular Value Decomposition
- SIFS:: Short Interframe Space
- EHT:: Extremely High Throughput
- CSI:: Channel State Information

According to a first aspect, the invention relates to a method for managing beamformed uplink transmissions of one or more beamformer devices, e.g. WiFi client stations, wherein the method is initialized by a beamformee device, e.g. a WiFi access point, the method comprising: transmitting, by a beamformee device, e.g. a WiFi access point, to one or more beamformer devices, e.g. WiFi client stations, an indication of a precoder for Uplink transmission per Uplink transmission.

This provides the advantage that such a method optimizes beamformed transmission in the uplink direction, i.e. from a beamformer device, e.g. a WiFi client station, to the beamformee device, e.g. a WiFi access point. Better antenna gains can be achieved when this method is applied where a precoder for Uplink transmission per Uplink transmission is indicated.

The above described problems can be overcome, i.e., SVD based precoder can be optimally designed even if Nss > 1; AP can adjust a precoder type for a detector that will be applied, advanced interference mitigation schemes can be applied which require different precoder adjusted to current interference spatial properties. AP can update and inform STAs regarding specific precoder that should be applied in the next UL frame.

The method comprises transmitting, by the beamformee device, a trigger frame to the one or more beamformer devices, wherein the trigger frame comprises the indication of the precoder.

This provides the advantage that in various technologies such as WiFi 802.11ax or 802.11be a trigger frame is already defined and existing that can be efficiently used to transport this additional information of precoder for Uplink transmission per Uplink transmission. Thus, a standard compatible solution can be provided.

In an exemplary implementation form of the method, the trigger frame comprises an indication of a specific precoder per uplink transmission that is based on previously collected channel state information, wherein the specific precoder is included within the trigger frame.

This provides the advantage that an optimal precoder can be used for UL transmission when a selection of the precoder is based on channel state information.

In an exemplary implementation form, the method comprises: selecting, by the beamformee device, a precoder per beamformer device from a set of precoders produced for different uplink transmissions; and indicating the selected precoder per beamformer device in the trigger frame.

This provides the advantage that no complex processing tasks for determining an optimal precoder is necessary, instead an easy selection from a given set of precoders, e.g. from a lookup table can be applied.

In an exemplary implementation form, the method comprises: selecting, by the beamformee device, a precoder per beamformer device for different types of uplink transmissions, wherein the different types of uplink transmissions are from the following: Single-User, SU, Multiple-User, MU, Multiple-User-MIMO, or from further types of uplink transmissions.

This provides the advantage that the indication of the precoder can be applied in multiple modes of beamformed communications such as SU, MU, MU-MIMO and others.

In an exemplary implementation form of the method, the trigger frame comprises a trigger frame indication field that includes the following information per beamformer device scheduled for the next uplink transmission: precoder type indication for indicating which type of precoder to use, and precoder data, e.g. wideband precoder data or codebook based precoder data with Precoding Matrix Indicator, PMI.

This provides the advantage that the trigger frame indication field can transport all relevant data required by the beamformer devices from the beamformee device to beamformer devices.

In an exemplary implementation form of the method, the precoder type indication indicates one of the following precoder types: first type: no precoder required, second type: last updated precoder to be used, third type: precoder indicated in trigger frame to be used, fourth type: precoder update will follow the trigger frame, by special precoder update frame, or further types of precoders.

This provides the advantage that the indication of precoder can be flexibly applied in different situations and environments, in particular for saving resources.

The method comprises: transmitting, by a beamformee device, a channel sounding announcement, e.g. a Null Data Packet Announcement, NDPA, for prompting the beamformer devices initiating a channel sounding procedure, and to receive a corresponding channel sounding frame, e.g. a Null Data Packet, NDP, from the beamformer devices responsive to the channel sounding announcement; transmitting, by the beamformee device, a feedback frame to a respective channel sounding frame, and transmitting, by the beamformee device, two or more different feedback update frames for updating a beamformer device with new precoding information to the same beamformer device based on the same channel sounding frame.

This provides the advantage that the novel mechanism of precoder indication can be easily and flexible adopted to the existing NDPA-NDP channel sounding procedure.

In an exemplary implementation form, the method comprises: transmitting, by the beamformee device, multiple feedback frames between two NDPA-NDP transmissions.

This provides an advantage of higher flexibility. Such feedback frames can provide information updates and channel state information. This allows the beamformee device, e.g. the AP, to collect CSI, and to decide later which precoder should be applied for a specific UL frame.

In an exemplary implementation form, the method comprises: computing, by the beamformee device, CSI information from the channel sounding procedure and; assigning a precoder to a respective beamformer device based on the computed CSI information.

This provides the advantage that based on the computed CSI information an optimal precoder can be determined.

In an exemplary implementation form of the method, the feedback update frame comprises one of the following: precoding matrices data based on previously performed channel sounding procedure, e.g. NDPA-NDP procedure, feedback type indication to allow further usage of the same precoder.

This provides the advantage that by using the same precoder, no complex processing tasks have to be performed by the beamformer device.

In an exemplary implementation form of the method, the trigger frame comprises common information and per user information, e.g. as defined by 802.11ax WiFi communications standard, wherein the per user information comprises trigger dependent user information which indicates a precoder for Uplink beamforming.

This provides the advantage that the precoder for Uplink beamforming can be easily added in the trigger frame format as defined by the WiFi standard, e.g. 802.11ax or 802.11be, thereby providing standard compliance of this new mechanism.

In an exemplary implementation form of the method, the trigger dependent user information indicates to use a last updated precoding matrix by not explicitly indicating a precoding matrix.

This provides the advantage that resources can be saved and complexity reduced when further using the last updated precoding matrix.

In an exemplary implementation form of the method, the trigger dependent user information comprises a precoding matrix to use.

This provides the advantage that precoding matrix can be easily transmitted to the beamformer device. The beamformer device can apply this precoding matrix to improve its beamformed transmission.

In an exemplary implementation form of the method, the trigger dependent user information comprises a Precoding Matrix Index, PMI, to indicate a precoding matrix from a predefined codebook.

This provides the advantage that by using a PMI, there is no need for transmitting the whole precoder from beamformee device to the beamformer devices which saves radio and processing resources.

According to a second aspect, the invention relates to a beamformee device, e.g. a WiFi access point, for initiating beamformed uplink transmissions of one or more beamformer devices, e.g. WiFi client stations, wherein the beamformee device is configured to: transmit to one or more beamformer devices, e.g. WiFi client stations, an indication of a precoder for Uplink transmission per Uplink transmission, transmit a trigger frame to the one or more beamformer devices, wherein the trigger frame comprises the indication of the precoder; transmit a channel sounding announcement, for prompting the multiple beamformer devices initiating a channel sounding procedure, and to receive a corresponding channel sounding frame from the beamformer devices responsive to the channel sounding announcement; transmit a feedback frame to a respective channel sounding frame; transmit two or more different feedback update frames for updating a beamformer device with new precoding information to the same beamformer device based on the same channel sounding frame.

This provides the advantage that such a beamformee device optimizes beamformed transmission in Uplink direction, i.e. from the beamformer devices, e.g. WiFi client stations to the beamformee device, e.g. a WiFi access point. Better antenna gains can be achieved by using this beamformee device which indicates a precoder for Uplink transmission per Uplink transmission.

The above described problems can be overcome, i.e., SVD based precoder can be optimally designed even if Nss > 1; AP can adjust a precoder type for a detector that will be applied, advanced interference mitigation schemes can be applied which require different precoder adjusted to current interference spatial properties. AP can update and inform STAs regarding specific precoder that should be applied in the next UL frame.

In an example, there is provided a radio device, e.g. an access point, for managing beamformed uplink transmissions of multiple client stations, wherein the radio device is configured to: transmit an indication of a precoder for beamformed Uplink transmission per Uplink transmission to the multiple client stations.

By using such a radio device and the following implementations thereof, the same advantages as described above with respect to the method according to the first aspect can be realized.

In an exemplary implementation form of the radio device, the radio device is configured to transmit a trigger frame to the multiple client stations, wherein the trigger frame comprises the indication of the precoder.

In an exemplary implementation form of the radio device, the trigger frame comprises an indication of a specific precoder per uplink transmission that is based on previously collected channel state information, wherein the specific precoder is included within the trigger frame.

In an exemplary implementation form of the radio device, the radio device is configured to select a precoder per client station from a set of precoders produced for different uplink transmissions and indicate the selected precoder per client station in the trigger frame.

In an exemplary implementation form of the radio device, the radio device is configured to select a precoder per client station for different types of uplink transmissions, wherein the different types of uplink transmissions are from the following: Single-User, SU, Multiple-User, MU, Multiple-User-MIMO, or from further types of uplink transmissions.

In an exemplary implementation form of the radio device, the trigger frame comprises a trigger frame indication field that includes the following information per client station scheduled for the next uplink transmission: precoder type indication for indicating which type of precoder to use, and precoder data for indicating precoding data, e.g. wideband precoder or codebook based precoder with Precoding Matrix Indicator, PMI.

In an exemplary implementation form of the radio device, the precoder type indication indicates one of the following precoder types: first type: no precoder required, second type: last updated precoder to be used, third type: precoder indicated in trigger frame to be used, fourth type: precoder update will follow the trigger frame, by special precoder update frame, or further types of precoders.

In an exemplary implementation form of the radio device, the radio device is configured to transmit a channel sounding announcement, e.g. a Null Data Packet Announcement, NDPA, for prompting the multiple client stations initiating a channel sounding procedure, and to receive a corresponding channel sounding frame, e.g. a Null Data Packet, NDP, from the multiple client stations responsive to the channel sounding announcement, wherein the radio device is configured to transmit a feedback frame to a respective channel sounding frame, and wherein the radio device is configured to transmit two or more different feedback update frames for updating a client station with new precoding information to the same client station based on the same channel sounding frame.

In an exemplary implementation form of the radio device, the radio device is configured to transmit multiple feedback frames between two NDPA-NDP transmissions.

In an exemplary implementation form of the radio device, the radio device is configured to compute CSI information from the channel sounding procedure and to assign a precoder to a respective client station based on the computed CSI information.

In an exemplary implementation form of the radio device, the feedback update frame comprises one of the following: precoding matrices data based on previously performed channel sounding procedure, e.g. NDPA-NDP procedure, feedback type indication to allow further usage of the same precoder.

In an exemplary implementation form of the radio device, the trigger frame comprises common information and per user information, e.g. as defined by 802.11ax WiFi communications standard, wherein the per user information comprises trigger dependent user information which indicates a precoder for Uplink beamforming.

In an exemplary implementation form of the radio device, the trigger dependent user information indicates to use a last updated precoding matrix by not explicitly indicating a precoding matrix.

In an exemplary implementation form of the radio device, the trigger dependent user information comprises a precoding matrix to use.

In an exemplary implementation form of the radio device, the trigger dependent user information comprises a Precoding Matrix Index, PMI, to indicate a precoding matrix from a predefined codebook.

According to an example there is provided a method for managing beamformed uplink transmissions of multiple client stations, wherein the method comprises: transmitting, by a radio device, e.g. an access point, an indication of a precoder for beamformed Uplink transmission per Uplink transmission to the multiple client stations.

Both the beamformee device and the beamformer devices can be implemented according to the WiFi communication standard such as 802.11ax and/or 802.11be.

### BRIEF DESCRIPTION OF THE DRAWINGS

Further embodiments of the invention will be described with respect to the following figures, in which:
Fig. 1 shows a schematic diagram of beamforming communication system 100 with an access point 110 and a plurality of client stations 101, 102, 103;
Fig. 2 shows a schematic diagram illustrating an exemplary beamforming procedure application 200 in Downlink;
Fig. 3 shows a schematic diagram illustrating an exemplary beamforming procedure application 300 in Uplink;
Fig. 4 shows a schematic diagram illustrating an exemplary Trigger-based Uplink transmission 400;
Fig. 5 shows a schematic diagram illustrating an exemplary transmission 500 including a trigger frame with precoder indication 504;
Fig. 6 shows a schematic diagram illustrating an exemplary transmission 600 including a Precoding Indication Field Format 601, 602;
Fig. 7 shows a schematic diagram illustrating an exemplary transmission 700 including a Precoder Update Frame 701;
Fig. 8 shows a schematic diagram illustrating an exemplary transmission 800 including a multiple feedback transmission 502 between an NDPA-NDP message 201, 501;
Fig. 9 shows a schematic diagram illustrating an exemplary transmission 900 including a Feedback Update Frame 901;
Fig. 10 shows a schematic diagram illustrating an exemplary implementation of a Trigger Frame Format 1000 according to a first option;
Fig. 11 shows a schematic diagram illustrating an exemplary implementation of a Trigger Frame Format 1100 according to a second option;
Fig. 12 shows a schematic diagram illustrating an exemplary implementation of a Trigger Frame Format 1200 according to a third option;
Fig. 13 shows a performance diagram 1300 illustrating an exemplary single user (SU) performance when beamforming is applied in the Uplink;
Fig. 14 shows a performance diagram 1400 illustrating an exemplary multi user MIMO (MU-MIMO) performance when beamforming is applied in the Uplink; and
Fig. 15 shows a schematic diagram of a method 1500 for managing beamformed uplink transmissions.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be implemented in wireless communication networks, e.g. communication networks based on WiFi communication standards according to IEEE 802.11, e.g. IEEE 802.11n/ax/be. The methods and devices described herein may also be implemented in wireless communication networks based on mobile communication standards such as LTE, e.g. 4.5G, 5G and beyond. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The devices, methods and systems described herein may be configured to transmit and/or receive radio signals. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The devices, methods and systems described herein may include processors. In the following description, the term "processor" describes any device that can be utilized for processing specific tasks (or blocks or steps). A processor can be a single processor or a multi-core processor or can include a set of processors or can include means for processing. A processor can process software or firmware or applications etc.

The devices, methods and systems described herein may process OFDM symbols with or without guard intervals. OFDM is a frequency-division multiplexing scheme used as a digital multi-carrier modulation method. A large number of closely spaced orthogonal sub-carrier signals are used to carry data on several parallel data streams or channels. Channel equalization is simplified because OFDM may be viewed as using many slowly modulated narrowband signals rather than one rapidly modulated wideband signal. The low symbol rate makes the use of a guard interval between symbols affordable, making it possible to eliminate intersymbol interference (ISI) and utilize echoes and time-spreading to achieve a diversity gain, i.e. a signal-to-noise ratio improvement. In OFDM, the beginning of each symbol is preceded by a guard interval. As long as the echoes fall within this interval, they will not affect the receiver's ability to safely decode the actual data, as data is only interpreted outside the guard interval.

The devices, methods and systems described herein may process radio signals including cyclic prefix. The term *cyclic prefix* refers to the prefixing of a symbol with a repetition of the end. Although the receiver is typically configured to discard the cyclic prefix samples, the cyclic prefix serves two purposes: As a guard interval, it eliminates the intersymbol interference from the previous symbol. As a repetition of the end of the symbol, it allows the linear convolution of a frequency-selective multipath channel to be modelled as circular convolution, which in turn may be transformed to the frequency domain using a discrete Fourier transform (DFT) or a Fast Fourier transform (FFT). This approach allows for simple frequency-domain processing, such as channel estimation and equalization.

The devices, methods and systems described herein may be configured to manage beamformed transmission. In the beamforming procedure, the beamformer initiates a channel sounding procedure with a Null Data Packet. The beamformee measures the channel and responds with a beamforming feedback frame, containing a compressed feedback matrix. The beamformer uses this information to compute the channel matrix. The beamformer can then use this channel matrix to focus the RF energy toward each user.

The methods and devices described herein may be implemented based on WiFi communication standards according to IEEE 802.11, e.g. IEEE 802.11n/ax/be. The 802.11ax standard has two modes of operation: 1) Single User: IN this sequential mode the wireless STAs send an receive data one at a time once they secure access to the medium; 2) Multi-User: This mode allows for simultaneous operation of multiple non-AP STAs. The standard divides this mode further into Downlink and Uplink Multi-User. Under the Multi-User mode of operation, the standard also specifies two different ways of multiplexing more users within a certain area: Multi-User MIMO and Orthogonal Frequency Division Multiple Access (OFDMA). For both of these methods, the AP acts as the central controller of all aspects of multi-user operation. An 802.11ax AP can also combine MU-MIMO with OFDMA operation.

Under the MU-MIMO method, 802.11ax devices will use beamforming techniques to direct packets simultaneously to spatially diverse users. That is, the AP will calculate a channel matrix for each user and steer simultaneous beams to different users, each beam containing specific packets for its target user. 802.11ax supports sending up to eight multi-user MIMO transmissions at a time, up from four for 802.11ac. Also, each MU-MIMO transmission may have its own Modulation and Coding Set (MCS) and a different number of spatial streams. In the MU-MIMO Uplink direction, the AP can initiate a simultaneous uplink transmission from each of the STAs by means of a trigger frame. When the multiple users respond in unison with their own packets, the AP applies the channel matrix to the received beams and separates the information that each uplink beam contains. The AP may also initiate Uplink multi-user transmissions to receive beamforming feedback information from all participating STAs.

The Wi-Fi community is currently specifying IEEE 802.11be also referred to as EHT (Extremely High Throughput) WiFi that is targeted at: A) enabling new MAC and PHY modes of operation capable of supporting a maximum throughput of at least 30 Gbps, measured at the MAC data service access point (AP), i.e. about 4 times higher than IEEE 802.11ax using carrier frequencies between 1 and 7.125 GHz, while B) ensuring backward compatibility and coexistence with legacy IEEE 802.11 devices in the 2.4, 5 and 6 GHz
unlicensed bands. The devices, methods and systems described in this disclosure may be implemented to be compliant with this new EHT WiFi standard.

The devices and systems described herein may include processors or processing devices or processing circuitries, memories and transceivers, i.e. transmitters and/or receivers for computing the beamformed transmissions. The term "processor" or "processing device" describes any device that can be utilized for processing specific tasks (or blocks or steps). A processor or processing device can be a single processor or a multi-core processor or can include a set of processors or can include means for processing. A processor or processing device can process software or firmware or applications etc.

Fig. 1 shows a schematic diagram of beamforming communication system 100 with an access point 110 and a plurality of client stations 101, 102, 103.

In the beamforming communication system 100 an access point 110 transmits in downlink direction to a plurality of client stations 101, 102, 103, e.g. by using a wide beam 111, and each client station 101, 102, 103 transmits in uplink direction towards the access point 110, e.g. by using a narrow beam 104, 105, 106. The access point 110 may be designed to initiate the client stations 101, 102, 103 to perform a beamforming procedure as described in this disclosure.

Fig. 2 shows a schematic diagram illustrating an exemplary beamforming procedure application 200 in Downlink.

DL beamforming is fully managed by the AP 220, e.g. AP 110 as shown in Fig. 1 while the precoder can be adjusted according to currently scheduled transmission. Different transmission schemes may require different precoders to achieve better performance - SU, MU, MU-MIMO. AP 220 collects the feedback information from different stations 210, e.g. stations 101, 102, 103 as shown in Fig. 1, and may compute the relevant precoder optimized for specific packet. For example, after NDPA 201, NDP 202, trigger frame 203 and Multi User Feedback 204 transmission, different precoders may be required for STA1, 101 to achieve better performance: SU Data STA1, 205, MU-MIMO STA1&2, 206, and MU-MIMO STA1&3, 207.

Fig. 3 shows a schematic diagram illustrating an exemplary beamforming procedure application 300 in Uplink.

In UL the same procedure is applied as described above with respect to Fig. 2 while the STA 220 acts as a beamformer and thus triggers the procedure and collects the precoder feedback from beamformee (AP) 220. After NDPA 201, NDP 202, trigger frame 203 and Multi User Feedback 204 transmission, SU Data STA1 transmission 205 can be performed. This means that STA 210 holds the precoder information and decides when and which precoder to apply.

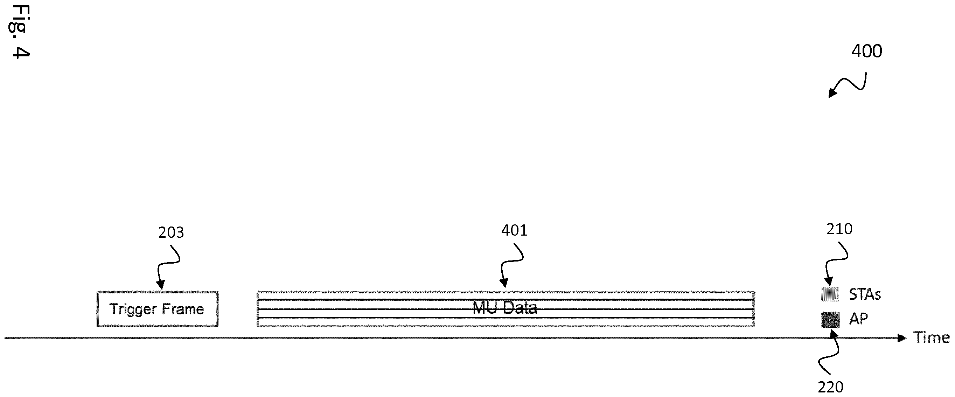

Fig. 4 shows a schematic diagram illustrating an exemplary Trigger-based Uplink transmission 400. The trigger-based Uplink transmission 400 includes a trigger frame 203 and MU Data 401.

The trigger-based Uplink transmission 400 may be applied in the WiFi standard 802.11ax as a trigger based procedure for UL multiuser transmissions, including MU-MIMO.

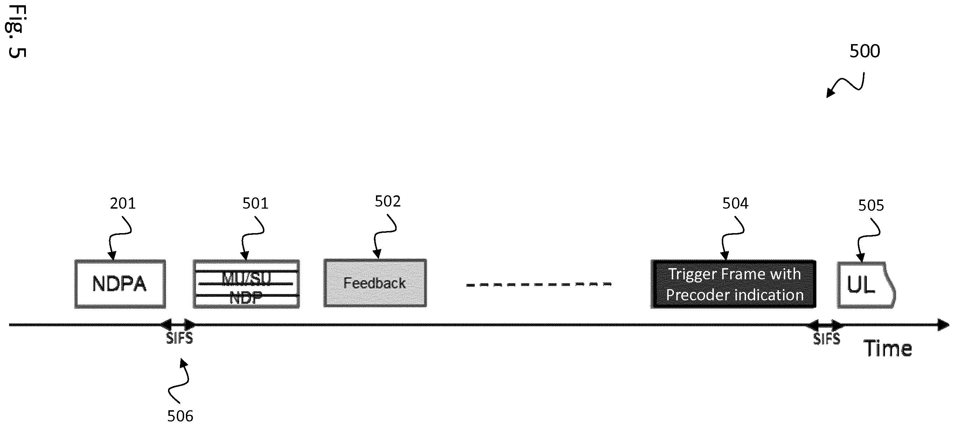

This method can be used to allow the AP 220 to manage BF procedure and indicate the precoder to be applied. The method includes the following functionality: Trigger frame 203 may include an indication data to inform STA 210 regarding BF application per UL transmission. AP 220 can indicate a specific precoder per UL transmission (based on previously collected CSI data and STAs allocated within packet). AP 220 can produce a multiple precoders optimized for different transmissions and choose the relevant precoder per UL transmission
Fig. 5 shows a schematic diagram illustrating an exemplary transmission 500 including a trigger frame with precoder indication 504. The whole transmission 500 includes an NDPA (Null Data Packet Announcement) frame 201, an MU/SU NDP frame 501 following the NDPA 201 after a short interframe space (SIFS) 506, a feedback frame 502, after some time the trigger frame with precoder indication 504 and after a further SIFS 506 the Uplink data 505.

The transmission 500 illustrates the concept of Precoder Update Per UL Frame. The main idea is to allow AP 220 to indicate to STAs 210 which precoder should be applied. The concept is to add to TF 203 relevant information that can both trigger a beamformed transmission and indicate which precoder should be applied.

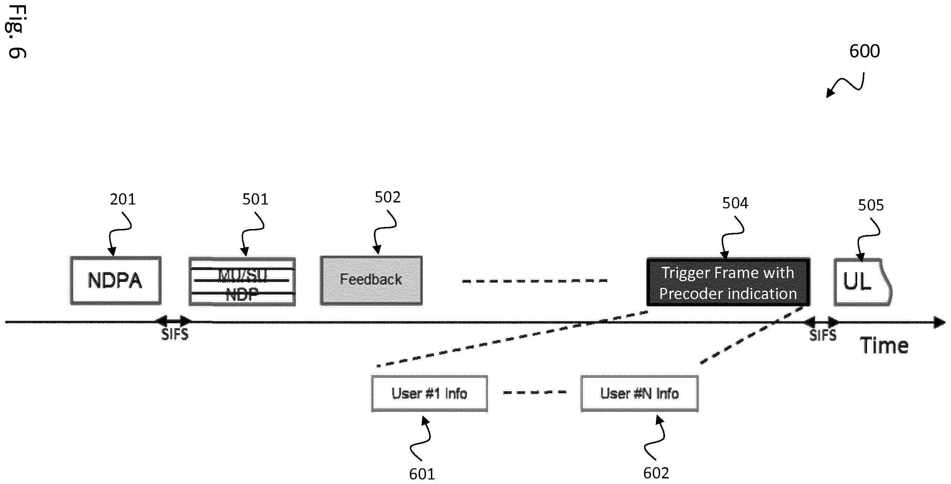

Fig. 6 shows a schematic diagram illustrating an exemplary transmission 600 including a Precoding Indication Field Format 601, 602. The transmission 600 corresponds to the transmission 500 described above with respect to Fig. 5 with the difference that the trigger frame with precoder indication 504 comprises a plurality of data 601, 602 providing user information for the respective clients or stations 210.

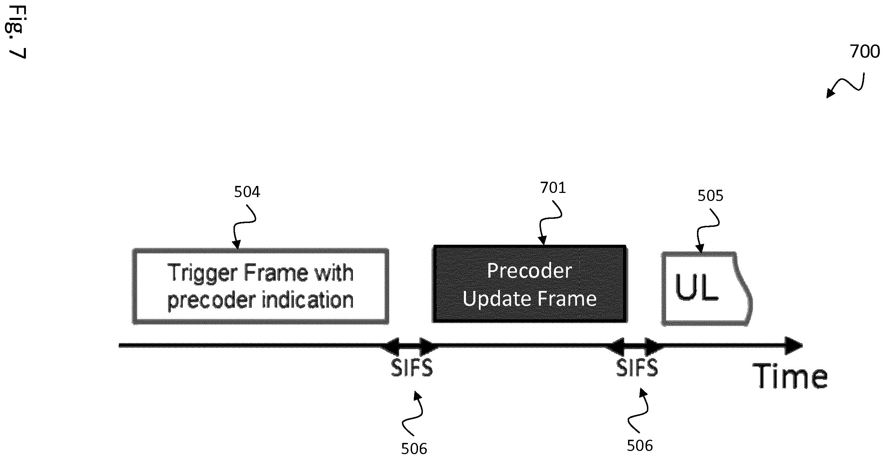

The transmission 600 illustrates the concept of TF Precoder Indication Field. The TF indication field includes the following information per user 601, 602 scheduled for the next UL transmission: 1) Precoder type indication that indicates which type of precoder should be applied (including precoder update indication, see Figure 7); and 2) Precoder data; in some cases the AP may use a trigger frame to carry the precoding data (for example, wideband precoder or codebook based precoder with PMI).

Fig. 7 shows a schematic diagram illustrating an exemplary transmission 700 including a Precoder Update Frame 701. The transmission 700 includes the trigger frame with precoder indication 504 as described above with respect to Figures 5 and 6, the Precoder Update Frame 701 and UL data 505 that may be separated by SIFS 506.

The concept of Precoder Type Indication is to indicate the Precoder type in the trigger frame 504. Precoder type may imply usage of one of the precoders that was sent previously to STA 210 or may indicate that precoder update is transmitted or that precoder update will follow the TF 504, by Precoder Update Frame 701. The following indication is just for example, i.e. any other bit configuration may be used.

For example,
- '000' - no precoder is required;
- '001'/ '010' - last updated SU/MU-MIMO precoder should be applied;
- '011' - precoder indicated in TF 504 should be applied;
- '100' - precoder update will follow the TF 504, by special frame 701.

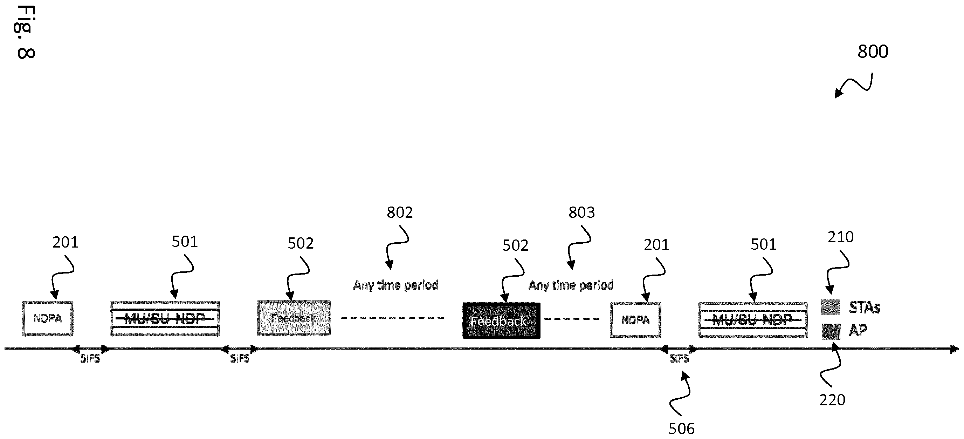

Fig. 8 shows a schematic diagram illustrating an exemplary transmission 800 including multiple feedback transmission 502 between an NDPA-NDP message 201, 501. The whole transmission 800 includes an NDPA (Null Data Packet Announcement) frame 201, an MU/SU NDP frame 501 following the NDPA 201 after a SIFS 506, a feedback frame 502, after any time period 802 further feedback frame 502 and after any further time period 803 further NDPA 201 and further MU/SU NDP 501.

NDPA-NDP procedure implicitly assumes immediate single feedback transmission and applying a precoder in the next frame. In this disclosure, a new method is introduced, where feedback transmission 502 can be done any time 802 after NDPA-NDP 201, 501 is performed and multiple feedback transmission 502 may be done between two NDPA-NDP transmissions 201, 501. This allows the AP 220 to collect CSI information, and to decide later which precoder should be applied for a specific UL frame.

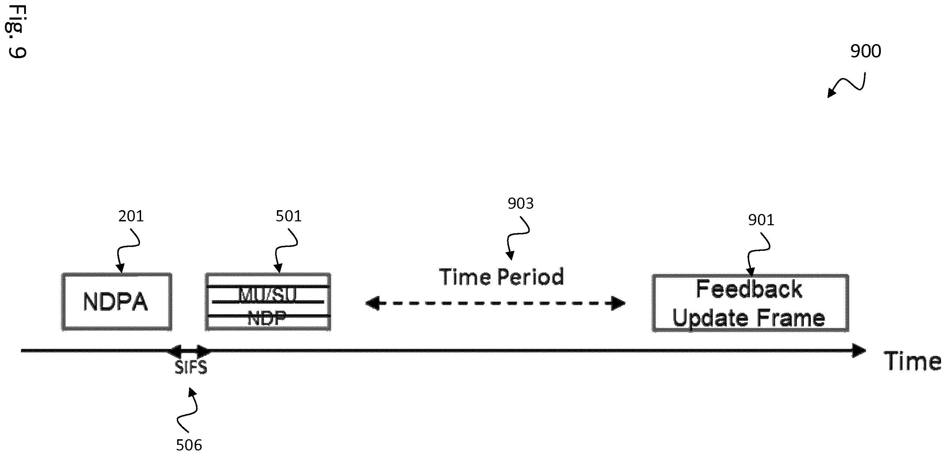

Fig. 9 shows a schematic diagram illustrating an exemplary transmission 900 including a Feedback Update Frame 901. The whole transmission 900 includes an NDPA frame 201, a MU/SU NDP frame 501 as described above with respect to Fig. 8 and after a time period 903 a feedback update frame 901.

Precoder Update Frame Format is described in the following: AP 220 may calculate different precoders to apply for different types of UL transmissions (e.g. SU, MU, MU-MIMO with different groups). In order to update STAs 210 with new and relevant precoding matrices, the AP 220 may transmit a feedback update frame 901. Feedback update frame 901 may be transmitted in SU or MU format. The feedback update frame 901 can include the following: Precoding matrices data based on previously performed NDPA-NDP procedure; and Feedback type indication - to allow further usage of the same precoder. Optionally, the feedback update frame 901 can include further information.

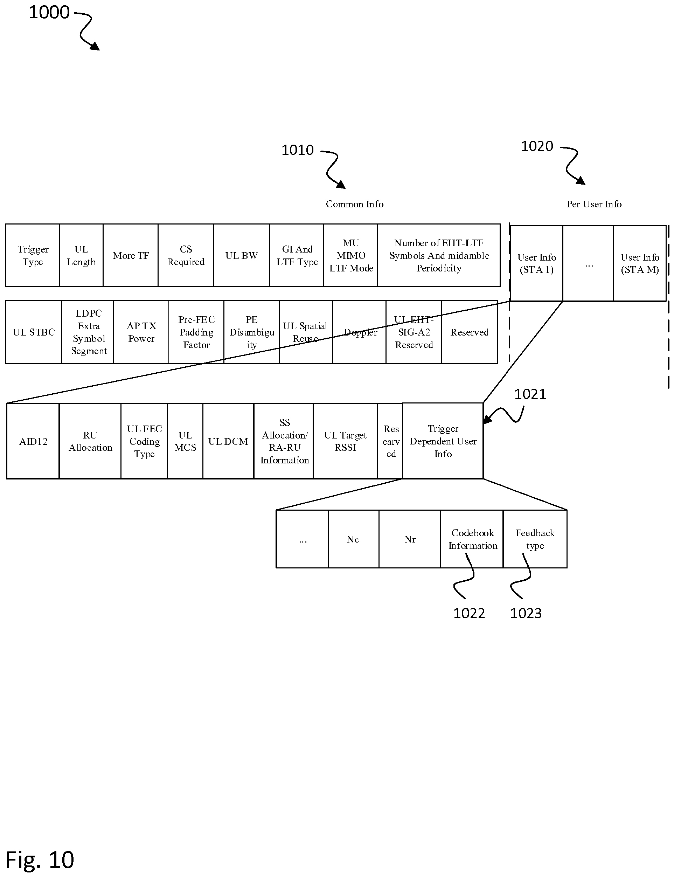

Fig. 10 shows a schematic diagram illustrating an exemplary implementation of a Trigger Frame Format 1000 according to a first option.

In the first option, a new trigger type is used for EHT trigger frame or for a basic trigger type, a reserved bit is used to differentiate HE/EHT basic trigger frame. Precoding matrix is not indicated in the trigger frame but depends on the previous memorized feedback (one or multiple fields can exist). The Trigger Frame Format 1000 includes common information 1010 and per user information 1020, e.g. for users 1 to M. Each user-specific information 1020 includes trigger-dependent user information 1021 which includes, beside identifications Nc and Nr, codebook information 1022 and feedback type 1023.

In trigger-based transmissions in extremely-high throughput (EHT) Wi-Fi systems, an access point 220 may generate a trigger frame compatible with two types of stations 210, such as EHT STAs and legacy (or high efficiency (HE)) STAs. The AP may transmit the trigger frame to a group of STAs, where legacy STAs may process the trigger frame as a legacy trigger frame. EHT STAs may process the trigger frame to determine resource unit (RU) allocations for uplink transmissions in a bandwidth greater than a legacy bandwidth. An EHT STA may determine the resources in the larger bandwidth based on an EHT RU allocation table, a legacy RU allocation table and an additional bit in the trigger frame, or an ordering of RU allocations in the trigger frame.

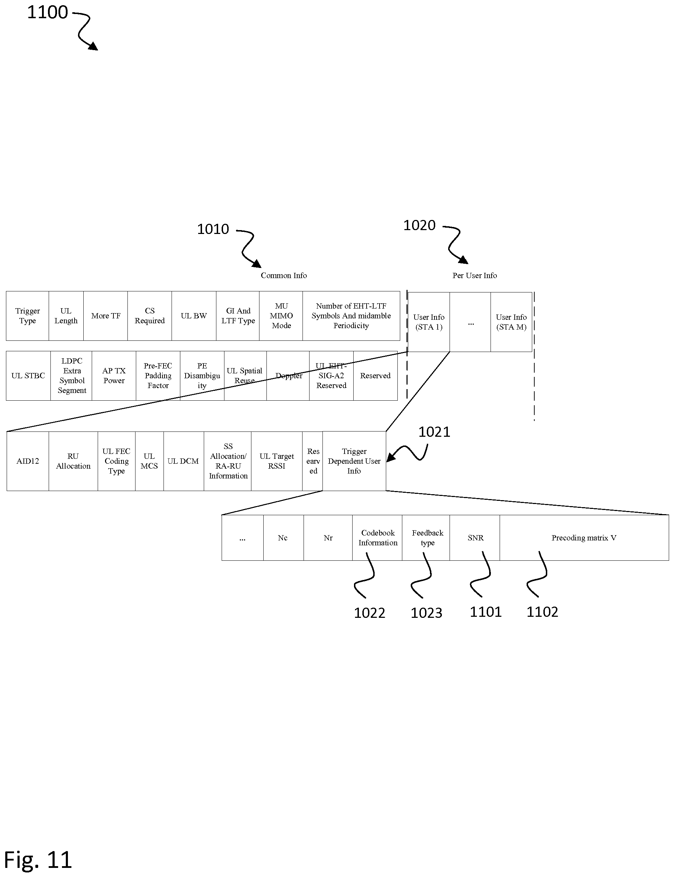

Fig. 11 shows a schematic diagram illustrating an exemplary implementation of a Trigger Frame Format 1100 according to a second option.

In the second option, a new trigger type is used for EHT trigger frame or for a basic trigger type, a reserved bit is used to differentiate HE/EHT basic trigger frame. Precoding matrix 1102 is explicitly indicated in the trigger dependent user information 1021 of the EHT trigger frame. One or multiple fields can exist.

The Trigger Frame Format 1100 includes common information 1010 and per user information 1020, e.g. for users 1 to M. Each user-specific information 1020 includes trigger-dependent user information 1021 which includes, beside identifications Nc and Nr, codebook information 1022, feedback type 1023, SNR 1101 and Precoding matrix 1102.

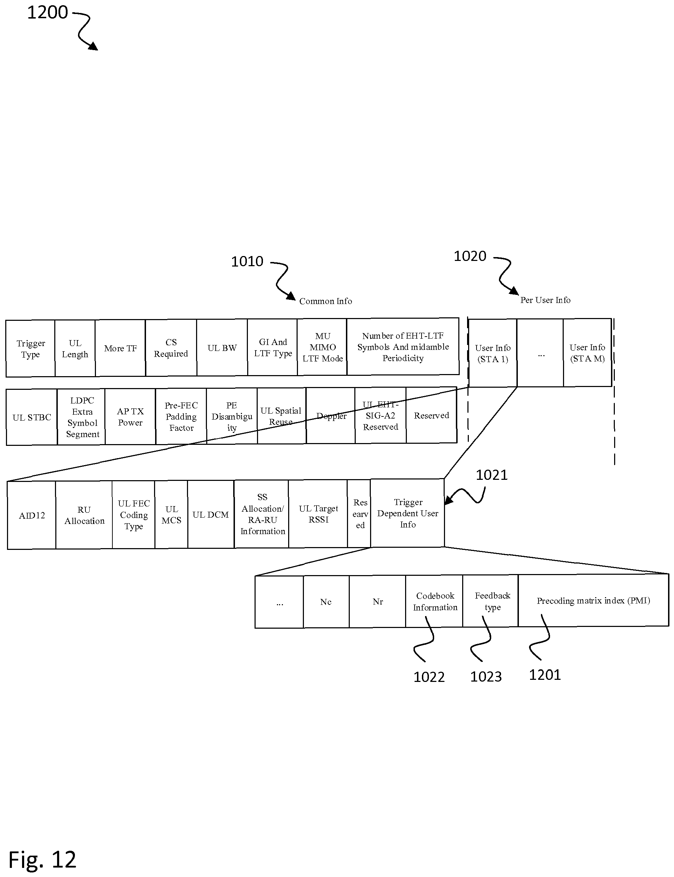

Fig. 12 shows a schematic diagram illustrating an exemplary implementation of a Trigger Frame Format 1200 according to a third option.

In the third option, a new trigger type is used for EHT trigger frame or for a basic trigger type, a reserved bit is used to differentiate HE/EHT basic trigger frame. A codebook is predefined. One or multiple fields can exist.

The Trigger Frame Format 1200 includes common information 1010 and per user information 1020, e.g. for users 1 to M. Each user-specific information 1020 includes trigger-dependent user information 1021 which includes, beside identifications Nc and Nr, codebook information 1022, feedback type 1023, and Precoding Matrix Index (PMI) 1201.

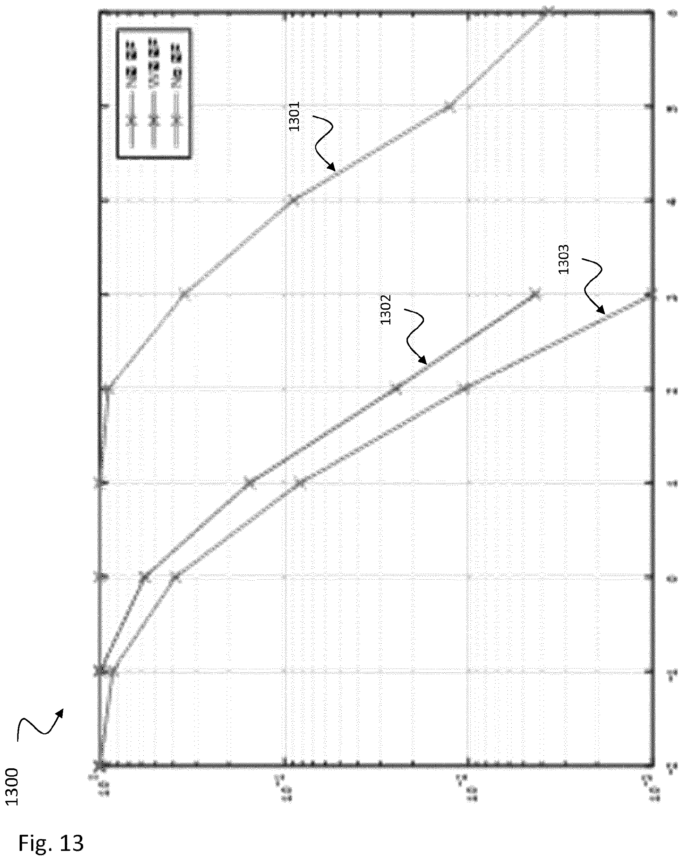

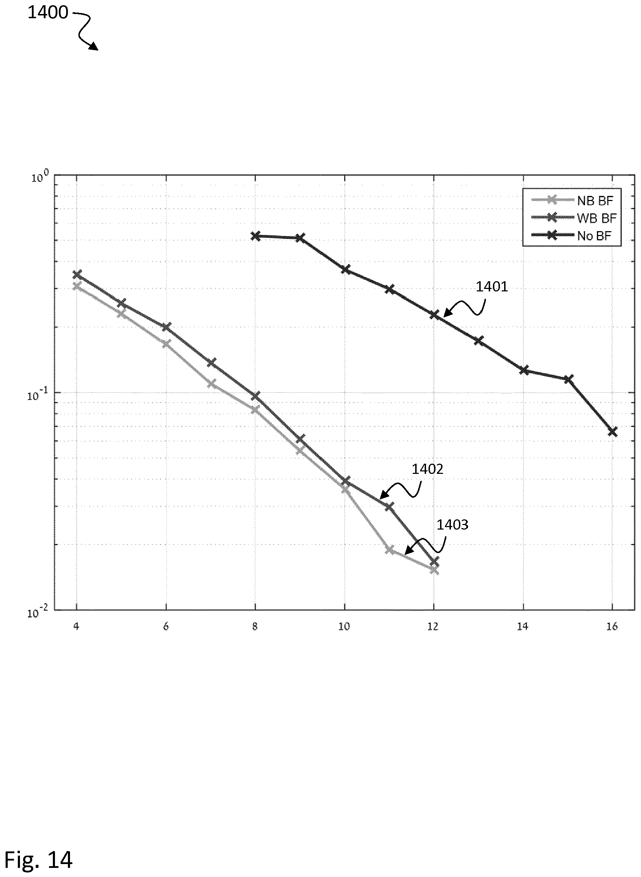

Fig. 13 shows a performance diagram 1300 illustrating an exemplary single user (SU) performance when beamforming is applied in the Uplink while Fig. 14 shows a performance diagram 1400 illustrating an exemplary multi user MIMO (MU-MIMO) performance when beamforming is applied in the Uplink.

Several simulations were performed to examine the gain that can be achieved if beamforming is applied in the UL. SU and MU-MIMO were simulated with the following parameters:
- TGn-D channel
- SU with Nss = 1
- MU-MIMO 3 STAs, Nss = 2 each, 16 Rx Antennas
- LDPC, 1500B, 2 Tx Antennas
- BF - per tone (NB) and Wideband (WB).

It can be seen from Figures 13 and 14 that beamforming outperforms non-pre-coded transmission by ~3dB; wideband beamforming provides a negligible degradation (~0.5dB).

In Figure 13, graph 1303 shows narrowband beamforming, graph 1302 shows wideband beamforming while graph 1301 shows result without beamforming. In Figure 14, graph 1403 shows narrowband beamforming, graph 1402 shows wideband beamforming while graph 1401 shows result without beamforming.

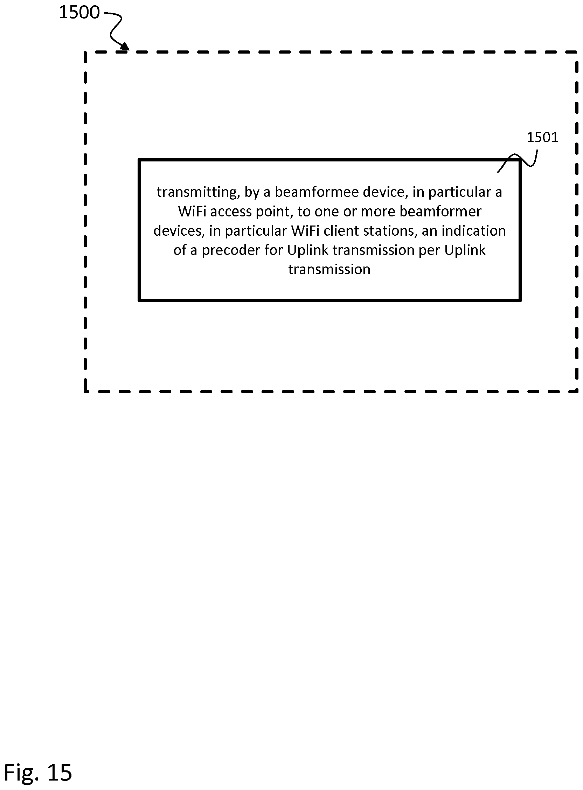

Fig. 15 shows a schematic diagram of a method 1500 for managing beamformed uplink transmissions.

The method 1500 is used for managing beamformed uplink transmissions of one or more beamformer devices 210, e.g. as described above with respect to Figures 2 to 12, e.g. WiFi client stations 101, 102, 103, e.g. as shown in Fig. 1. The method 1500 is initialized by a beamformee device 220, e.g. a WiFi access point 110. The method 1500 comprises: transmitting 1501, by a beamformee device 220, e.g. a WiFi access point 110, to one or more beamformer devices 210, e.g. WiFi client stations 101, 102, 103, an indication of a precoder for Uplink transmission per Uplink transmission 104, 105, 106, e.g. as described above with respect to Figures 4 to 14.

In an example, the method 1500 comprises: Transmitting 1501, by the beamformee device 220, a trigger frame, e.g. a trigger frame 203, 504 as described above with respect to Figures 4 to 12, to the one or more beamformer devices, wherein the trigger frame 504 comprises the indication of the precoder.

In an example, the trigger frame 504 comprises an indication of a specific precoder per uplink transmission that is based on previously collected channel state information, wherein the specific precoder is included within the trigger frame 504, e.g. as described above with respect to Figures 4 to 14.

In an example, the method 1500 comprises: selecting, by the beamformee device 220, a precoder per beamformer device 210 from a set of precoders produced for different uplink transmissions; and indicating the selected precoder per beamformer device 210 in the trigger frame 504, e.g. as described above with respect to Figures 4 to 14.

In an example, the method 1500 comprises: selecting, by the beamformee device 220, a precoder per beamformer device 210 for different types of uplink transmissions, wherein the different types of uplink transmissions are from the following: Single-User, SU, Multiple-User, MU, Multiple-User-MIMO, or from further types of uplink transmissions, e.g. as described above with respect to Figures 4 to 14.

In an example, the trigger frame 504 comprises a trigger frame indication field that includes the following information 601, 602 per beamformer device 210 scheduled for the next uplink transmission: precoder type indication for indicating which type of precoder to use, and precoder data for indicating precoding data, e.g. wideband precoder or codebook based precoder with Precoding Matrix Indicator, PMI, e.g. as described above with respect to Figure 6.

In an example, the precoder type indication indicates one of the following precoder types: first type: no precoder required, second type: last updated precoder to be used, third type: precoder indicated in trigger frame to be used, fourth type: precoder update will follow the trigger frame, by special precoder update frame, or further types of precoders, e.g. as described above with respect to Figure 7.

In an example, the method 1500 comprises: transmitting, by a beamformee device 220, a channel sounding announcement, e.g. a Null Data Packet Announcement, NDPA 201, for prompting the beamformer devices 210 initiating a channel sounding procedure, and to receive a corresponding channel sounding frame, e.g. a Null Data Packet, NDP, 501 from the beamformer devices 210 responsive to the channel sounding announcement 201; transmitting, by the beamformee device 220, a feedback frame 502 to a respective channel sounding frame 501, and transmitting, by the beamformee device 220, two or more different feedback update frames 901 for updating a beamformer device 210 with new precoding information to the same beamformer device 210 based on the same channel sounding frame 501.

In an example, the method 1500 comprises: transmitting, by the beamformee device 220, multiple feedback frames 502 between two NDPA-NDP transmissions, e.g. as described above with respect to Figure 8.

In an example, the method 1500 comprises: computing, by the beamformee device, channel state information (CSI) from the channel sounding procedure and; assigning a precoder to a respective beamformer device based on the computed CSI information, e.g. as described above with respect to Figures 4 to 12.

In an example, the feedback update frame comprises one of the following: precoding matrices data based on previously performed channel sounding procedure, e.g. NDPA-NDP procedure, feedback type indication to allow further usage of the same precoder, e.g. as described above with respect to Figure 9.

In an example, the trigger frame comprises common information 1010 and per user information 1020, e.g. as defined by 802.11ax WiFi communications standard, wherein the per user information 1020 comprises trigger dependent user information 1021 which indicates a precoder for Uplink beamforming, e.g. as described above with respect to Figures 10 to 12.

In an example, the trigger dependent user information 1021 indicates to use a last updated precoding matrix by not explicitly indicating a precoding matrix, e.g. as described above with respect to Figure 10.

In an example, the trigger dependent user information 1021 comprises a precoding matrix 1102 to use, e.g. as described above with respect to Figure 11.

In an example, the trigger dependent user information 1021 comprises a Precoding Matrix Index (PMI) 1201, to indicate a precoding matrix from a predefined codebook, e.g. as described above with respect to Figure 12.

The method 1500 may be applied in a beamformee device, e.g. an access point 110 as shown in Figure 1.

Such a beamformee device 110, e.g. a WiFi access point, can be used for initiating beamformed uplink transmissions of one or more beamformer devices, e.g. WiFi client stations 101, 102, 103, e.g. as shown in Fig. 1, wherein the beamformee device 110 is configured to: transmit to one or more beamformer devices, e.g. WiFi client stations 101, 102, 103, an indication of a precoder for Uplink transmission per Uplink transmission, e.g. as described above with respect to Figures 4 to 12.

The present disclosure also supports a computer program product including computer executable code or computer executable instructions that, when executed, causes at least one computer to execute the performing and computing steps described herein, in particular the steps of the method 1500 described above. Such a computer program product may include a readable non-transitory storage medium storing program code thereon for use by a computer. The program code may perform the processing and computing steps described herein, in particular the method 1500 described above.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. A method (1500) for managing beamformed uplink transmissions from one or more beamformer devices (210), wherein the method (1500) is initialized by a beamformee device (220), the method comprising:
transmitting (1501), by a beamformee device (220), to one or more beamformer devices (210), an indication of a precoder for uplink transmission per uplink transmission (104, 105, 106);
transmitting (1501), by the beamformee device (220), a trigger frame (504) to the one or more beamformer devices, wherein the trigger frame (504) comprises the indication of the precoder;
before transmitting the trigger frame, transmitting, by the beamformee device (220), a channel sounding announcement, for prompting the beamformer devices (210) initiating a channel sounding procedure, and to receive a corresponding channel sounding frame from the beamformer devices (210) responsive to the channel sounding announcement (201);
transmitting, by the beamformee device (220), a feedback frame (502) to a respective channel sounding frame (501), and
transmitting, by the beamformee device (220), two or more different feedback update frames (901) for updating a beamformer device (210) with new precoding information to the same beamformer device (210) based on the same channel sounding frame (501).

2. The method (1500) of claim 1,
wherein the trigger frame (504) comprises an indication of a specific precoder per uplink transmission that is based on previously collected channel state information, wherein the specific precoder is included within the trigger frame (504).

3. The method (1500) of claim 1 or 2, comprising:
selecting, by the beamformee device (220), a precoder per beamformer device (210) from a set of precoders produced for different uplink transmissions; and indicating the selected precoder per beamformer device (210) in the trigger frame (504).

4. The method (1500) of one of claims 1 to 3, comprising:
selecting, by the beamformee device (220), a precoder per beamformer device (210) for different types of uplink transmissions, wherein the different types of uplink transmissions are from the following:
Single-User, SU,
Multiple-User, MU, or
Multiple-User-MIMO.

5. The method (1500) of one of claims 1 to 4,
wherein the trigger frame (504) comprises a trigger frame indication field that includes the following information (601, 602) per beamformer device (210) scheduled for the next uplink transmission:
a precoder type indication for indicating which type of precoder to use, and
precoder data.

6. The method (1500) of claim 5,
wherein the precoder type indication indicates one of the following precoder types:
first type: no precoder required,
second type: last updated precoder to be used,
third type: precoder indicated in trigger frame to be used, or
fourth type: precoder update will follow the trigger frame, by special precoder update frame.

7. The method (1500) of any preceding claim, comprising:
transmitting, by the beamformee device (220), multiple feedback frames (502) between two channel sounding announcement - channel sounding frame transmissions.

8. The method (1500) of any preceding claim, comprising:
computing, by the beamformee device, CSI information from the channel sounding procedure and; assigning a precoder to a respective beamformer device based on the computed CSI information.

9. The method (1500) of any preceding claim,
wherein the feedback update frame comprises one of the following:
precoding matrices data based on previously performed channel sounding procedure,
feedback type indication to allow further usage of the same precoder.

10. The method (1500) of any preceding claim,
wherein the trigger frame comprises common information and per user information,
wherein the per user information comprises trigger dependent user information which indicates a precoder for uplink beamforming.

11. The method (1500) of claim 10,
wherein the trigger dependent user information indicates to use a last updated precoding matrix by not explicitly indicating a precoding matrix.

12. The method (1500) of claim 10,
wherein the trigger dependent user information comprises a precoding matrix to use;or
wherein the trigger dependent user information comprises a Precoding Matrix Index, PMI, to indicate a precoding matrix from a predefined codebook.

13. A beamformee device (110) for initiating beamformed uplink transmissions of one or more beamformer devices, wherein the beamformee device is configured to:
transmit to one or more beamformer devices an indication of a precoder for Uplink transmission per Uplink transmission;
transmit a trigger frame to the one or more beamformer devices, wherein the trigger frame comprises the indication of the precoder;
before transmitting the trigger frame,
transmit a channel sounding announcement, for prompting the multiple beamformer devices initiating a channel sounding procedure, and to receive a corresponding channel sounding frame from the beamformer devices responsive to the channel sounding announcement;
transmit a feedback frame to a respective channel sounding frame;
transmit two or more different feedback update frames for updating a beamformer device with new precoding information to the same beamformer device based on the same channel sounding frame.

## Patentansprüche

1. Verfahren (1500) zum Verwalten von strahlgeformten Uplink-Übertragungen von einer oder mehreren Strahlformervorrichtungen (210), wobei das Verfahren (1500) durch eine strahlgeformte Vorrichtung (220) eingeleitet wird, wobei das Verfahren umfasst:
Übertragen (1501), durch eine strahlgeformte Vorrichtung (220), an eine oder mehrere Strahlformervorrichtungen (210), einer Anzeige eines Vorcodierers für die Uplink-Übertragung pro Uplink-Übertragung (104, 105, 106);
Übertragen (1501), durch die strahlgeformte Vorrichtung (220), eines Auslöserahmens (504) an die eine oder die mehreren Strahlformervorrichtungen, wobei der Auslöserahmen (504) die Anzeige des Vorcodierers umfasst;
vor dem Übertragen des Auslöserahmens, Übertragen, durch die strahlgeformte Vorrichtung (220), einer Channel-Sounding-Ankündigung zum Auffordern der Strahlformervorrichtungen (210), eine Channel-Sounding-Prozedur einzuleiten, und um als Reaktion auf die Channel-Sounding-Ankündigung (201) einen entsprechenden Channel-Sounding-Rahmen von den Strahlformervorrichtungen (210) zu empfangen;
Übertragen, durch die strahlgeformte Vorrichtung (220), eines Rückkopplungsrahmens (502) an einen entsprechenden Channel-Sounding-Rahmen (501), und
Übertragen, durch die strahlgeformte Vorrichtung (220), von zwei oder mehr unterschiedlichen Rückkopplungsaktualisierungsrahmen (901) zum Aktualisieren einer Strahlformervorrichtung (210) mit neuen Vorcodierungsinformationen an dieselbe Strahlformervorrichtung (210) basierend auf demselben Channel-Sounding-Rahmen (501).

2. Verfahren (1500) nach Anspruch 1,
wobei der Auslöserahmen (504) eine Anzeige eines spezifischen Vorcodierers pro Uplink-Übertragung, die auf zuvor erfassten Kanalzustandsinformationen basiert, umfasst, wobei der spezifische Vorcodierer innerhalb des Auslöserahmens (504) enthalten ist.

3. Verfahren (1500) nach Anspruch 1 oder 2, das umfasst:
Auswählen, durch die strahlgeformte Vorrichtung (220), eines Vorcodierers pro Strahlformervorrichtung (210) aus einem Satz von Vorcodierern, die für unterschiedliche Uplink-Übertragungen erzeugt werden; und Anzeigen des ausgewählten Vorcodierers pro Strahlformervorrichtung (210) in dem Auslöserahmen (504).

4. Verfahren (1500) nach einem der Ansprüche 1 bis 3, das umfasst:
Auswählen, durch die strahlgeformte Vorrichtung (220), eines Vorcodierers pro Strahlformervorrichtung (210) für unterschiedliche Arten von Uplink-Übertragungen, wobei die unterschiedlichen Arten von Uplink-Übertragungen aus den Folgenden sind:
Einzelbenutzer, SU,
Mehrfachbenutzer, MU, oder
Mehrfachbenutzer-MIMO.

5. Verfahren (1500) nach einem der Ansprüche 1 bis 4,
wobei der Auslöserahmen (504) ein Auslöserahmenanzeigefeld umfasst, das die folgenden Informationen (601, 602) pro Strahlformervorrichtung (210), die für die nächste Uplink-Übertragung geplant ist, enthält:
eine Vorcodiererartanzeige zum Anzeigen, welche Art von Vorcodierer genutzt werden soll, und
Vorcodiererdaten.

6. Verfahren (1500) nach Anspruch 5,
wobei die Vorcodiererartanzeige eine der folgenden Vorcodiererarten anzeigt:
erste Art: kein Vorcodierer erforderlich,
zweite Art: der zuletzt aktualisierte Vorcodierer soll genutzt werden,
dritte Art: Vorcodierer, der in dem Auslöserahmen angezeigt wird, soll genutzt werden, oder
vierte Art: Vorcodiereraktualisierung folgt auf den Auslöserahmen, durch einen speziellen Vorcodiereraktualisierungsrahmen.

7. Verfahren (1500) nach einem der vorstehenden Ansprüche, das umfasst:
Übertragen, durch die strahlgeformte Vorrichtung (220), einer Mehrzahl von Rückkopplungsrahmen (502) zwischen zwei Channel-Sounding-Ankündigung - Channel-Sounding-Rahmen-Übertragungen.

8. Verfahren (1500) nach einem der vorstehenden Ansprüche, das umfasst:
Berechnen, durch die strahlgeformte Vorrichtung, von CSI-Informationen aus der Channel-Sounding-Prozedur, und; Zuweisen eines Vorcodierers zu einer jeweiligen Strahlformervorrichtung basierend auf den berechneten CSI-Informationen.

9. Verfahren (1500) nach einem der vorstehenden Ansprüche,
wobei der Rückkopplungsaktualisierungsrahmen eines der Folgenden umfasst:
Vorcodieren von Matrizendaten basierend auf der zuvor durchgeführten Channel-Sounding-Prozedur,
Rückkopplungsartanzeige, um eine weitere Nutzung desselben Vorcodierers zu ermöglichen.

10. Verfahren (1500) nach einem der vorstehenden Ansprüche,
wobei der Auslöserahmen allgemeine Informationen und Informationen pro Benutzer umfasst,
wobei die Informationen pro Benutzer auslöserabhängige Benutzerinformationen, die einen Vorcodierer für ein Uplink-Strahlformen anzeigen, umfassen.

11. Verfahren (1500) nach Anspruch 10,
wobei die auslöserabhängigen Benutzerinformationen anzeigen, dass eine zuletzt aktualisierte Vorcodierungsmatrix durch nicht explizites Anzeigen einer Vorcodierungsmatrix genutzt werden soll.

12. Verfahren (1500) nach Anspruch 10,
wobei die auslöserabhängigen Benutzerinformationen eine Vorcodierungsmatrix, die genutzt werden soll, umfassen; oder
wobei die auslöserabhängigen Benutzerinformationen einen Vorcodierungsmatrixindex, PMI, umfassen, um eine Vorcodierungsmatrix aus einem zuvor definierten Codebuch anzuzeigen.

13. Strahlgeformte Vorrichtung (110) zum Einleiten von strahlgeformten Uplink-Übertragungen von einer oder mehreren Strahlformervorrichtungen, wobei die strahlgeformte Vorrichtung konfiguriert ist zum:
Übertragen an eine oder mehrere Strahlformervorrichtungen einer Anzeige eines Vorcodierers für die Uplink-Übertragung pro Uplink-Übertragung;
Übertragen eines Auslöserahmens an die eine oder die mehreren Strahlformervorrichtungen, wobei der Auslöserahmen die Anzeige des Vorcodierers umfasst;
vor dem Übertragen des Auslöserahmens, Übertragen einer Channel-Sounding-Ankündigung zum Auffordern der Mehrzahl von Strahlformervorrichtungen, eine Channel-Sounding-Prozedur einzuleiten, und um als Reaktion auf die Channel-Sounding-Ankündigung einen entsprechenden Channel-Sounding-Rahmen von den Strahlformervorrichtungen zu empfangen;
Übertragen eines Rückkopplungsrahmens an einen jeweiligen Channel-Sounding-Rahmen;
Übertragen von zwei oder mehr unterschiedlichen Rückkopplungsaktualisierungsrahmen zum Aktualisieren einer Strahlformervorrichtung mit neuen Vorcodierungsinformationen an dieselbe Strahlformervorrichtung basierend auf demselben Channel-Sounding-Rahmen.

## Revendications

1. Procédé (1500) permettant de gérer des transmissions de liaison montante formées par faisceaux à partir d'un ou de plusieurs dispositifs de formation de faisceaux (210), dans lequel le procédé (1500) est initialisé par un dispositif formé par faisceaux (220), le procédé comprenant :
la transmission (1501), par un dispositif formé par faisceaux (220), à un ou plusieurs dispositifs de formation de faisceaux (210), d'une indication d'un précodeur pour une transmission de liaison montante par transmission de liaison montante (104, 105, 106) ;
la transmission (1501), par le dispositif formé par faisceaux (220), d'une trame de déclencheur (504) au ou aux dispositifs de formation de faisceaux, dans lequel la trame de déclencheur (504) comprend l'indication du précodeur ;
avant de transmettre la trame de déclencheur, la transmission, par le dispositif formé par faisceaux (220), d'une annonce de sondage de canal, pour inviter les dispositifs de formation de faisceaux (210) à initier une procédure de sondage de canal, et recevoir une trame de sondage de canal correspondante en provenance des dispositifs de formation de faisceaux (210) en réponse à l'annonce de sondage de canal (201) ;
la transmission, par le dispositif formé par faisceaux (220), d'une trame de rétroaction (502) à une trame de sondage de canal respective (501), et
la transmission, par le dispositif formé par faisceaux (220), de deux trames de mise à jour de rétroaction différentes ou plus (901) pour mettre à jour un dispositif de formation de faisceaux (210) avec de nouvelles informations de précodage pour le même dispositif de formation de faisceaux (210) sur la base de la même trame de sondage de canal (501).

2. Procédé (1500) selon la revendication 1,
dans lequel la trame de déclencheur (504) comprend une indication d'un précodeur spécifique par transmission de liaison montante qui est basée sur des informations d'état de canal collectées précédemment, dans lequel le précodeur spécifique est inclus dans la trame de déclencheur (504).

3. Procédé (1500) selon la revendication 1 ou 2, comprenant :
la sélection, par le dispositif formé par faisceaux (220), d'un précodeur par dispositif de formation de faisceaux (210) à partir d'un ensemble de précodeurs produits pour différentes transmissions de liaison montante ; et l'indication du précodeur sélectionné par dispositif de formation de faisceaux (210) dans la trame de déclencheur (504).

4. Procédé (1500) selon l'une des revendications 1 à 3, comprenant :
la sélection, par le dispositif formé par faisceaux (220), d'un précodeur par dispositif de formation de faisceaux (210) pour différents types de transmissions de liaison montante, dans lequel les différents types de transmissions de liaison montante sont parmi les suivants :
monoutilisateur, SU,
utilisateurs multiples, MU, ou
MIMO à utilisateurs multiples.

5. Procédé (1500) selon l'une des revendications 1 à 4,
dans lequel la trame de déclencheur (504) comprend un champ d'indication de trame de déclencheur qui comporte les informations suivantes (601,602) par dispositif de formation de faisceaux (210) programmé pour la prochaine transmission de liaison montante :
une indication de type de précodeur pour indiquer quel type de précodeur utiliser, et
des données de précodeur.

6. Procédé (1500) selon la revendication 5,
dans lequel l'indication de type de précodeur indique l'un des types de précodeur suivants :
premier type : aucun précodeur n'est nécessaire,
deuxième type : dernier précodeur mis à jour à utiliser,
troisième type : précodeur indiqué dans une trame de déclencheur à utiliser, ou
quatrième type : la mise à jour de précodeur suivera la trame de déclencheur, par une trame de mise à jour spéciale de précodeur.

7. Procédé (1500) selon l'une quelconque revendication précédente, comprenant :
la transmission, par le dispositif formé par faisceaux (220), de multiples trames de rétroaction (502) entre deux transmissions d'annonce de sondage de canal et de trame sondage de canal.

8. Procédé (1500) selon l'une quelconque revendication précédente, comprenant :
le calcul, par le dispositif formé par faisceaux, d'informations CSI à partir de la procédure de sondage de canal et ; l'attribution d'un précodeur à un dispositif de formation de faisceaux respectif sur la base des informations CSI calculées.

9. Procédé (1500) selon l'une quelconque revendication précédente,
dans lequel la trame de mise à jour de rétroaction comprend l'un des éléments suivants :
des données de matrices de précodage sur la base d'une procédure de sondage de canal réalisée précédemment,
une indication de type de rétroaction pour permettre une utilisation ultérieure du même précodeur.

10. Procédé (1500) selon l'une quelconque revendication précédente,
dans lequel la trame de déclencheur comprend des informations communes et des informations par utilisateur,
dans lequel les informations par utilisateur comprennent des informations d'utilisateur dépendant du déclencheur qui indiquent un précodeur pour une formation de faisceaux de liaison montante.

11. Procédé (1500) selon la revendication 10,
dans lequel les informations d'utilisateur dépendant du déclencheur indique d'utiliser une dernière matrice de précodage mise à jour en n'indiquant pas explicitement une matrice de précodage.

12. Procédé (1500) selon la revendication 10,
dans lequel les informations utilisateur dépendant du déclencheur comprennent une matrice de précodage à utiliser ;ou
dans lequel les informations utilisateur dépendant du déclencheur comprennent un indice de matrice de précodage, PMI, pour indiquer une matrice de précodage à partir d'un livre de codes prédéfini.

13. Dispositif formé par faisceaux (110) permettant d'initier des transmissions de liaison montante formées par faisceaux d'un ou de plusieurs dispositifs de formation de faisceaux, dans lequel le dispositif formé par faisceaux est configuré pour :
transmettre à un ou plusieurs dispositifs de formation de faisceaux une indication d'un précodeur pour une transmission de liaison montante par transmission de liaison montante ;
transmettre une trame de déclencheur au ou aux dispositifs de formation de faisceaux, dans lequel la trame de déclencheur comprend l'indication du précodeur ;
avant de transmettre la trame de déclencheur, transmettre une annonce de sondage de canal, pour inviter les multiples dispositifs de formation de faisceaux à initier une procédure de sondage de canal, et recevoir une trame de sondage de canal correspondante en provenance des dispositifs de formation de faisceaux en réponse à l'annonce de sondage de canal ;
transmettre une trame de rétroaction à une trame de sondage de canal respective ;
transmettre deux trames différentes de mise à jour de rétroaction ou plus pour mettre à jour un dispositif de formation de faisceaux avec de nouvelles informations de précodage au même dispositif de formation de faisceaux sur la base de la même trame de sondage de canal.
